# EUROPEAN PATENT APPLICATION

(11) **EP 4 778 790 A1**
(43) Date of publication of application: **22.07.2026**
(21) Application number: 24865902.1
(22) Date of filing: 13.09.2024
(51) Int. Cl.: B60R 25/24, G01S 5/02, G01S 13/02, G06F 9/50

(54) **DIGITAL KEY SYSTEM**

(30) Priority: 13.09.2023 KR 20230122113
(71) Applicant: LG Innotek Co., Ltd., Seoul 07796 (KR)
(72) Inventor: KIM, Tae Hyung, Seoul 07796 (KR); BAE, Sung Jun, Seoul 07796 (KR); KIM, Jang Seob, Seoul 07796 (KR)
(74) Representative: Plasseraud IP
(86) International application number: PCT/KR2024/013999
(87) International publication number: WO 2025/058463

(57) **Abstract**

A digital key system according to an embodiment of the present invention comprises: a user terminal; a vehicle terminal for performing communication with the user terminal; and a server for performing communication with the vehicle terminal, wherein the vehicle terminal transmits data measured through communication with the user terminal to the server and controls a vehicle by using the location of the user terminal received from the server, and the server calculates the location of the user terminal with respect to the vehicle terminal by using the data received from the vehicle terminal and transmits the location of the user terminal to the vehicle terminal.

## Description

### [Technical Field]

The teachings in accordance with exemplary and non-limiting embodiments of the present invention relate generally to a digital key system.

### [Background Arts]

Advancements in wireless communication technology have led to the development of digital keys or smart keys, enabling users to unlock a vehicle remotely without physically inserting a key. These devices allow users within a certain distance of the vehicle to remotely unlock or lock the vehicle.

Such digital keys must operate only when the user is within a certain distance, as they must simultaneously consider vehicle theft prevention (security) and user convenience. To achieve this, the user's distance must be measured. However, limitations in the capacity and memory of the vehicle's internal MCU impose significant constraints on the size or computation time of the positioning algorithms that can be applied, resulting in performance limitations.

### [Summary of Invention]

### [Technical Subject]

The technical subject that the present invention seeks to solve is to provide a digital key system and a vehicle control method that utilize a server to measure a user's location.

### [Technical Solution]

To solve the aforementioned technical subject, a digital key system according to an embodiment of the present invention may comprise: a user terminal; a vehicle terminal for performing communication with the user terminal; and a server for performing communication with the vehicle terminal, wherein the vehicle terminal transmits data measured through communication with the user terminal to the server and controls a vehicle by using the location of the user terminal received from the server, and the server calculates the location of the user terminal with respect to the vehicle terminal by using the data received from the vehicle terminal and transmits the location of the user terminal to the vehicle terminal.

Preferably, but not necessarily, the vehicle terminal may comprise: a first communication module which broadcasts a first signal and detects the user terminal by receiving a second signal corresponding to the first signal from the user terminal; and a plurality of second communication modules, each of which communicates with the user terminal and is positioned at a distance from the others.

Preferably, but not necessarily, the plurality of second communication modules may operate when the first communication module detects the user terminal.

Preferably, but not necessarily, the vehicle terminal may transmit a third signal to the user terminal via each of the plurality of second communication modules, and transmit the data of the fourth signal received from the user terminal to the server.

Preferably, but not necessarily, the data of the fourth signal may include the time at which the third signal was transmitted and the time at which the fourth signal was received, or the channel impulse response information of the fourth signal.

Preferably, but not necessarily, the server may calculate the location of the user terminal using the positions of the plurality of second communication modules and the data of the fourth signal.

Preferably, but not necessarily, the vehicle terminal may include a control module that controls the vehicle based on the location of the user terminal.

Preferably, but not necessarily, the server may include a neural network learned to calculate the location of the user terminal from data measured by the vehicle terminal through communication with the user terminal.

Preferably, but not necessarily, the server may receive feedback information from the user terminal regarding the calculated location of the user terminal, thereby generating user data, and transmit the generated user data to a manufacturer.

To address the aforementioned technical challenges, a vehicle control method according to an embodiment of the present invention may comprise: a step wherein a vehicle terminal communicates with a user terminal; a step wherein the vehicle terminal transmits data measured through communication with the user terminal to a server; a step wherein the server calculates the location of the user terminal relative to the vehicle terminal using the data received from the vehicle terminal; a step wherein the server transmits the calculated location of the user terminal to the vehicle terminal; and a step wherein the vehicle terminal controls the vehicle using the location of the user terminal received from the server.

### [Advantageous Effects]

According to embodiments of the present invention, performance bottlenecks in in-vehicle MCUs and the like can be resolved by utilizing a server. This reduces or relaxes necessary review items during algorithm design (such as capacity and time requirements), enables positioning algorithm design beyond the limitations of the vehicle's constrained resources, allows the use of algorithms previously inaccessible on existing platforms such as Deep-Learning algorithms, and permits the utilization of information within the terminal when the user terminal and server are connectable

Furthermore, utilizing servers can facilitate management, maintenance and repair. It enables easier reflection of usage data and customer feedback, simplifies data acquisition and tracking for performance enhancement, facilitates data collection by vehicle type, allows immediate response to customer pain points, enables periodic algorithm optimization and update management based on collected data, and can facilitate adaptation to vehicle platform changes (SDV).

Furthermore, resource savings are achievable. If there are n vehicles equipped with digital keys, the service can be provided using fewer than n processors, as the current digital key system architecture already communicates with various servers such as OEMs and Device Servers, it is anticipated that existing architecture servers can also be utilized, and by designing a base model and configuring only the input parameters that distinguish vehicles, a single positioning algorithm can be applied to multiple vehicles, potentially reducing man-hours.

### [Brief Description of Drawings]

FIG. 1 is a block diagram of a digital key system according to an embodiment of the present invention.
FIGS. 2 and 3 are block diagrams of a vehicle terminal according to an embodiment of the present invention.
FIG. 4 illustrates a digital key system according to an embodiment of the present invention.
FIG. 5 is a block diagram of a digital key system according to another embodiment of the present invention, and FIG. 6 illustrates the digital key system according thereto.
FIG. 7 is a flowchart of a vehicle control method according to an embodiment of the present invention.

### [Best Modes]

Hereinafter, the attached drawings are referred to in detail to explain the preferred embodiment of the present invention.

However, the technical idea of the present invention is not limited to the some embodiments described, but can be implemented in various different forms, and within the scope of the technical idea of the present invention, one or more of the components between the embodiments can be selectively combined or replaced.

In addition, the terms used in the embodiments of the present invention (including technical and scientific terms) can be interpreted to mean what a person with ordinary skill in the art would understand, unless explicitly defined and described, and generally understood by a person with ordinary skill in the art. Generally used terms, such as those defined in dictionaries, can be interpreted in the context of the relevant technology.

Furthermore, the terms used in the embodiments of the present invention are intended to explain the embodiments and are not intended to limit the invention.

In this specification, the singular form may include the plural form unless otherwise specified in the text, and when described as 'A and (and/and) B, C, at least one (or more than one) of A, B, and C,' it may include one or more of all combinations of A, B, and C.

In addition, terms such as 1, 2, A, B, (a), and (b) may be used to describe the components of the embodiments of the present invention. Such terms are intended only to distinguish the component from other components and are not limited by the nature, order, or sequence of the component.

And, if any component is described as being 'connected', 'coupled' or 'attached' to another component, that component may be directly connected, coupled or attached to that other component, as well as being 'connected', 'coupled' or 'attached' to another component that is between that component and that other component.

In addition, when it is stated that each component is formed or arranged 'above or below', the above or below includes not only the case where two components are directly in contact with each other, but also the case where one or more other components are formed or arranged between the two components. In addition, when it is expressed as 'upper or lower', it can include the meaning of the lower direction as well as the upper direction based on one component.

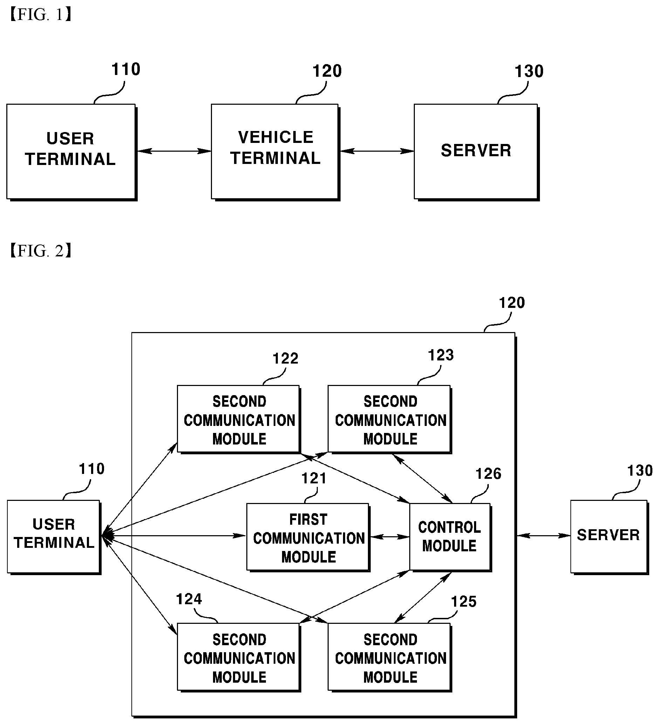

FIG. 1 is a block diagram of a digital key system according to an embodiment of the present invention.

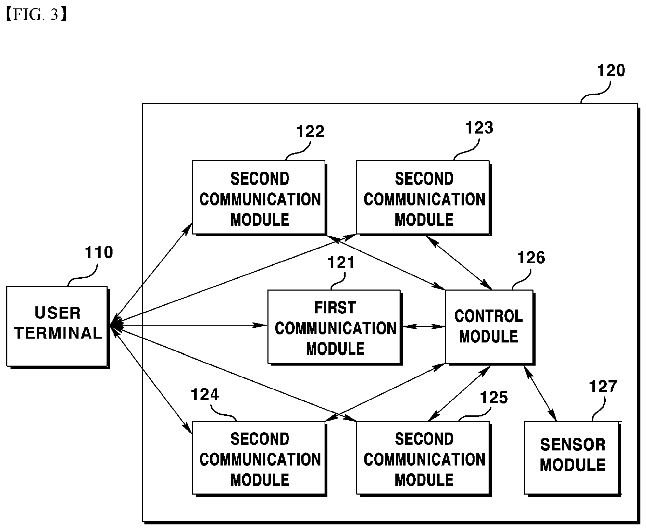

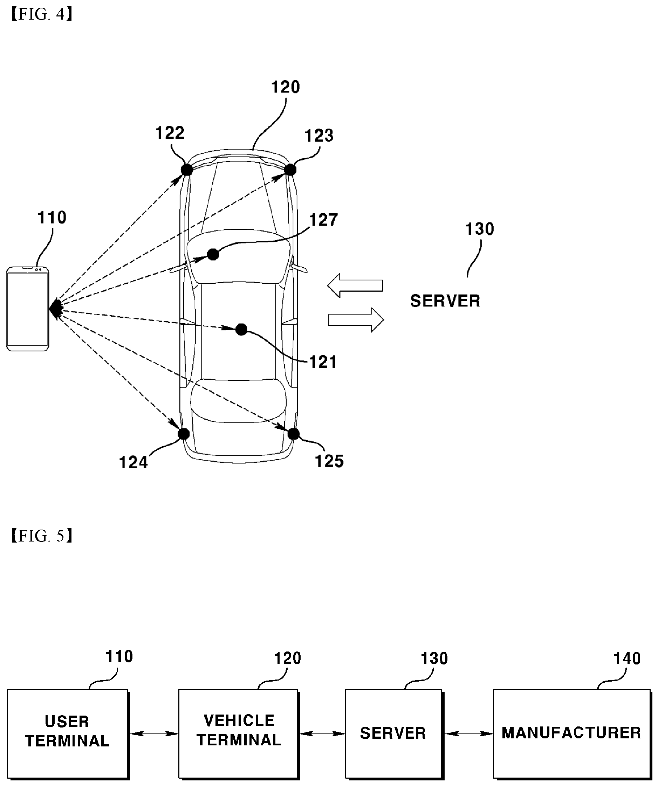

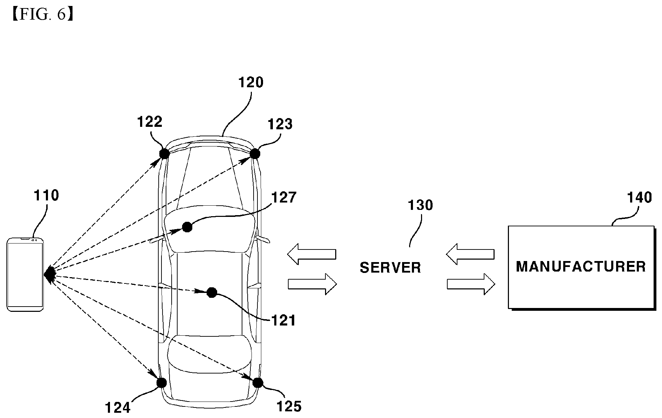

FIGS. 2 and 3 are block diagrams of a vehicle terminal according to an embodiment of the present invention, FIG. 4 illustrates a digital key system according to an embodiment of the present invention, FIG. 5 is a block diagram of a digital key system according to another embodiment of the present invention, and FIG. 6 illustrates the digital key system according thereto.

The digital key system according to an embodiment of the present invention may comprise a user terminal (110), a vehicle terminal (120), and a server (130), and may include a manufacturer (140).

The user terminal (110) communicates with the vehicle terminal (120). The user terminal (110) is a terminal that communicates with the vehicle terminal (120) to enable control of the vehicle from inside or outside the vehicle, and may be a key-shaped digital key or smart key, or a mobile terminal or smart terminal. Additionally, the user terminal (110) may be any form of terminal capable of communicating with the vehicle terminal (120). The user terminal

(110) may include an input portion, such as buttons or a screen, for entering commands to control the vehicle.

The vehicle terminal (120) communicates with the user terminal (110). The vehicle terminal (120) is a device installed in the vehicle, and the vehicle may refer to a means of transport capable of travelling on roads or tracks. For example, the vehicle may include not only passenger cars but also transportable means such as lorries.

The vehicle terminal (120) can control the vehicle, such as opening or closing doors or starting the vehicle's engine, based on the positional relationship between the user terminal (110) and the vehicle terminal (120). When the distance from the user terminal (110) is within a preset distance or when the user terminal (110) is located at a predetermined position, the vehicle terminal (120) can open or close the vehicle doors or start the vehicle engine. The vehicle terminal (120) may control the vehicle without separate commands based on its distance from the user terminal (110), or it may only control the vehicle according to received commands when the user terminal (110) is within a pre-set distance and a command is received from the user terminal (110).

The vehicle terminal (120) can obtain the distance from the user terminal (110) via the server (130). To this end, the vehicle terminal (120) can transmit data required to calculate the distance from the user terminal (110) to the server (130).

The server (130) communicates with the vehicle terminal (120). The server (130) may communicate with the user terminal (110) or the manufacturer (140).

The vehicle terminal (120) transmits data measured through communication with the user terminal to the server, and the server (130) receives data from the vehicle terminal (120) and calculates the location of the user terminal (110) relative to the vehicle terminal (120). Here, the location of the user terminal (110) may include its relative position or absolute position with respect to the vehicle terminal (120). It may include directional and distance information relative to the center of the vehicle. If the location of the vehicle terminal (120) is specified by latitude and longitude, etc., the corresponding location of the user terminal (110) can be calculated.

The server (130) transmits the calculated position of the user terminal (110) relative to the vehicle terminal (120) to the vehicle terminal (120), and the vehicle terminal (120) can then utilize the received position of the user terminal to control the vehicle.

The vehicle terminal (120) may include a first communication module (121) and second communication modules (122 to 125).

The first communication module (121) may broadcast a first signal and detect a user terminal (110) by receiving a second signal corresponding to the first signal from the user terminal (110).

The first communication module (121) may broadcast the first signal. The first communication module (121) may broadcast the first signal at a preset cycle. For example, the first communication module (121) may broadcast the first signal at a cycle of 2 seconds. The first signal may include a data packet. The first communication module (121) may utilize an omnidirectional antenna, thereby enabling it to broadcast the first signal in all directions. The first communication module (121) may communicate with the user terminal (110) using the 2.4[GHz] frequency band. The first communication module (121) may be a Bluetooth Low Energy (BLE) communication module. The first communication module (121) may be disposed within the vehicle's loop to minimize radio wave interference.

The first communication module (121), upon receiving a second signal corresponding to the first signal from the user terminal (110), can detect the user terminal (110) using the second signal, can obtain the ToF (Time of Flight) distance information of the second signal based on the time the second signal was transmitted from the user terminal (110) and the time the second signal was received. and can acquire CIR (Channel Impulse Response) information of the second signal, among other things.

The second communication modules (122 to 125) can communicate with the user terminal (110) respectively and may include a plurality of second communication modules positioned at a distance (spaced apart) from each other.

The second communication modules (122 to 125) may comprise at least three second communication modules. Depending on the vehicle configuration, four second communication modules (122 to 125) may be included. The second communication modules (122 to 125) are disposed at fixed positions within the vehicle, spaced apart from one another, and the direction and distance of separation therebetween may be fixed. The second communication modules (122 to 125) may operate upon detection of the user terminal (110) by the first communication module (121). The first communication module (121) is set to sleep mode or power-saving mode before detecting the user terminal (110), and upon detecting the user terminal (110), the first communication module (121) switches to wake-up mode and can then communicate with the user terminal (110). The second communication modules (122 to 125) can communicate with the user terminal (110) using the baseband frequency band and directional antennas. The second communication module (122 to 125) may be an Ultra WideBand (UWB) communication module. The second communication module (122 to 125) may be disposed at the front, rear, left side, right side, and corner portions of each side of the vehicle.

Each of the plurality of second communication modules (122 to 125) may transmit a third signal to the user terminal (110), and the user terminal (110) may transmit a fourth signal corresponding to the third signal to each of the second communication modules (122 to 125). At least three of the second communication modules (122 to 125) may each communicate with the user terminal (110) and acquire data of the fourth signal using communication with the user terminal (110). Here, the data of the fourth signal may include the time at which the third signal was transmitted and the time at which the fourth signal was received, or impulse response information of the fourth signal. The time of transmission of the third signal and the time of reception of the fourth signal can be used to obtain ToF distance information.

The vehicle terminal (120) may transmit data measured by the first communication module (121) or the second communication modules (122 to 125) to the server (130). The vehicle terminal (120) may transmit the data of the second signal from the first communication module (121) or the data of the fourth signal from the second communication module (122 to 125) to the server (130). Either the first communication module (121) or the second communication module (122 to 125) may transmit the measured data to the server (130), or they may transmit the measured data to the server (130) in an integrated manner via a single communication module.

The server (130) may calculate the location of the user terminal (110) relative to the vehicle terminal (120) using the data received from the vehicle terminal (120).

The server (130) may calculate the location of the user terminal (110) using the positions of the plurality of second communication modules (122 to 125) and the data of the fourth signal. The separation distance and direction of the plurality of second communication modules (122 to 125) are fixed and thus, the distance from each second communication module (122 to 125) to the user terminal (110) can be calculated using the fourth data of each second communication module (122 to 125). The distance to the user terminal (110) can be calculated using the time at which the second communication module (122 to 125) transmitted the third signal and the time at which the fourth signal was received. The calculated distance information can be corrected using the movement speed of the user terminal (110) to determine the distance to the user terminal (110). The distance to the user terminal (110) can be calculated using the time interval between the transmission time of the third signal and the reception time of the fourth signal, and the speed of light. The server (130) can calculate the distance to the user terminal (110) by determining the movement amount of the user terminal (110) using its movement speed and the calculated time interval, and then correcting the calculated distance based on the said movement amount.

As described above, the position of the user terminal (110) can be calculated using triangulation or similar methods, utilizing the distance from each calculated second communication module (122 to 125) to the user terminal (110) and the fact that the second communication modules (122 to 125) are spaced apart in a specific direction and at a specific distance. In this case, when the number of second communication modules (122 to 125) is four or more, the position of the user terminal (110) can be calculated using the data from the three second communication modules (122 to 125) that are closest in distance. As the likelihood of noise occurring in the communication signal increases with distance, the position of the user terminal (110) can be calculated using the three second communication modules (122 to 125) that are closer in distance, rather than the second communication module with the calculated greater distance. Alternatively, for greater accuracy, the position of the user terminal (110) can be calculated using a larger number of second communication modules.

The server (130) can calculate the distance to the user terminal (110) using the second signal from the first communication module (121). The first communication module can calculate the distance to the user terminal (110) based on the time the second signal was transmitted from the user terminal (110) and the time the second signal was received. The calculated distance information can be corrected using the movement speed of the user terminal (110) to determine the distance to the user terminal (110). The distance to the user terminal (110) can be calculated using the time interval between the transmission time of the second signal and the reception time of the second signal, and the speed of light. The first communication module (121) can calculate the movement amount(displacement) of the user terminal (110) using the movement speed of the user terminal (110) and the time interval calculated as described above, and can calculate the distance to the user terminal (110) by correcting the calculated distance using the calculated movement amount(displacement).

The server (130) may utilize the distance to the user terminal (110) calculated from the data of the second signal of the first communication module (121) to correct or selectively utilize the distance to the user terminal (110) calculated from the fourth signal data of the second communication modules (122 to 125).

The server (130) may include a neural network learned (trained) to calculate the location of the user terminal (110) from data measured by the vehicle terminal (120) through communication with the user terminal (110). The location of the user terminal (110) can be rapidly derived using the learned (trained) neural network. The server (130), being a cloud server rather than a vehicle, possesses greater resources than the vehicle for utilizing deep learning algorithms and consequently, can rapidly derive the location of the user terminal (110) without consuming the vehicle's resources. The neural network can be learned using a learned data set comprising input data, which is a signal data received by the vehicle terminal (120) located at a predetermined position and distance, and comparison data, which is a location data from the user terminal (110). Here, it is natural that various neural network algorithms such as CNN or DNN may be employed.

The positioning algorithm for calculating the location of a user terminal (110) is complex in design and involves numerous considerations such as capacity or latency. The application of algorithms, such as machine learning or deep learning, which can be expected to yield different effects compared to existing rule-based models for vehicles, to the vehicle's MCU is currently difficult, and when applying to new vehicles, separate algorithm design is required to reflect changes such as the vehicle type and module mounting position, such that, results may vary depending on the MCU performance installed in the vehicle, the UWB module location, and the vehicle type, making new algorithm design or numerous modifications highly likely.

By calculating the location of the user terminal (110) via the server (130), resource savings are achievable. If there are n vehicles equipped with digital keys, the service can be provided using fewer than n processors, and as communication with various servers, such as OEMs and Device Servers, is already occurring within the current digital key system structure, existing servers within the architecture can be utilized. Furthermore, by designing a base model and only individually configuring the input parameters that distinguish vehicles, a single positioning program or algorithm can be applied to multiple vehicle types, potentially reducing man-hours.

The server (130) transmits the location of the user terminal (110) calculated for the vehicle terminal (120) to the vehicle terminal (120). The vehicle terminal (120) can then control the vehicle using the location of the user terminal received from the server (130).

The vehicle terminal (120) may include a control module (126) that controls the vehicle based on the location of the user terminal (110). The control module (126) may unlock the vehicle doors if the location of the user terminal (110) is within a preset distance from a preset direction. For example, if the location of the user terminal (110) is determined to be within 1 meter of the vehicle's driver's seat, the control module (126) may unlock the vehicle's doors. Conversely, if the location is determined to be more than 5 meters away from the driver's seat, the control module (126) may lock the vehicle's doors.

Alternatively, if the user terminal (110) is within a predetermined direction and distance or located inside the vehicle, the vehicle's air conditioning or ignition may be activated. This may utilize information from a sensor module (127), disposed either inside or outside the vehicle, regarding whether the driver is seated in the driver's seat. That is, the control module (126) can control the vehicle using the location of the user terminal (110) received from the server (130) and the sensing information from the sensor module (127).

The sensor module (127) may include various sensors capable of detecting persons inside or outside the vehicle, or detecting a person's seating, such as a weight-sensing sensor, a motion-sensing sensor, or a capacitive sensor. The control module (126) may include a microcontroller unit (MCU).

The server (130) can perform various functions for the digital key system, as well as calculate the location of the user terminal (110) relative to the vehicle terminal (120) using data received from the vehicle terminal (120). Compared to the limited resources of the vehicle, the server (130), being a cloud server, can utilize substantial resources. Consequently, it can not only calculate the location of the user terminal (110), but also receive feedback information from the user terminal regarding the calculated location, thereby generating user data. This generated user data can then be transmitted to the manufacturer (140).

Feedback from users utilizing digital keys can be received from the user terminal (110), and this can be used to generate user data which is provided to the manufacturer (140), including user information and vehicle information. The manufacturer (140) can utilize the information received from the server (130) to facilitate management and maintenance of the digital key system. The manufacturer (140) can utilize the server (130) to manage program updates or versions for the digital key system. This facilitates the incorporation of usage data and customer feedback, simplifies the acquisition and tracking of data for performance improvement purposes, eases the collection of data by vehicle model, enables the immediate reflection of customer pain points, facilitates periodic algorithm optimization and updates management based on collected data, and simplifies adaptation to vehicle platform changes (SDV).

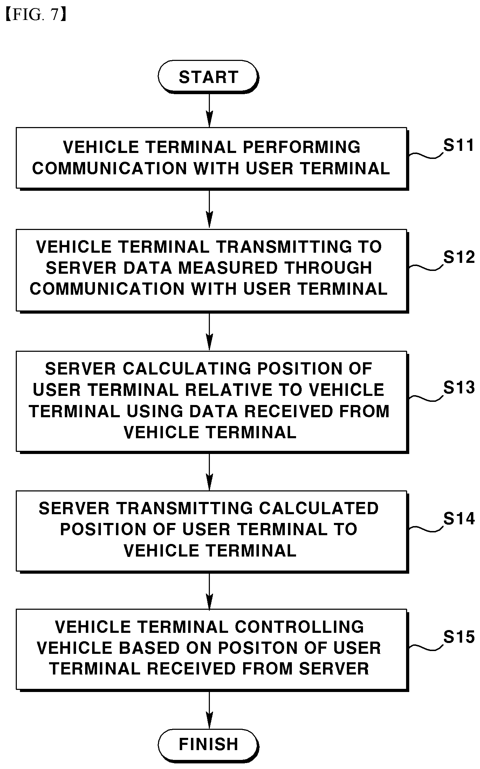

FIG. 7 is a flowchart of the vehicle control method according to an embodiment of the present invention. Detailed descriptions of each step in FIG. 7 correspond to the detailed descriptions of the digital key system in FIGS. 1 to 6, and therefore, redundant explanations are omitted hereafter.

The vehicle control method according to an embodiment of the present invention is a method for controlling a vehicle using a digital key system, wherein in step S11, the vehicle terminal communicates with the user terminal, and in step S12, the vehicle terminal transmits data measured through communication with the user terminal to the server.

At this time, the vehicle terminal may broadcast a first signal, receive from the user terminal a second signal corresponding to the first signal to respectively perform communications with the first communication module and the second communication module that detect the user terminal, and include a mutually spaced-apart plurality of second communication modules, wherein the first communication module or each of the plural second communication modules may communicate with the user terminal. The vehicle terminal may transmit a third signal to the user terminal via each of a plurality of second communication modules, and transmit data of a fourth signal received from the user terminal to the server, and here, the data of the fourth signal may include the time at which the third signal was transmitted, the time at which the fourth signal was received, or channel impulse response information of the fourth signal.

In step S13, the server calculates the location of the user terminal relative to the vehicle terminal using data received from the vehicle terminal. In step S14, the server transmits the calculated location of the user terminal to the vehicle terminal.

The server may include a neural network learned (trained) to calculate the location of the user terminal from data measured by the vehicle terminal through communication with the user terminal, and may calculate the location of the user terminal using the location of a plurality of second communication modules and data of the fourth signal.

The server may receive feedback information of the user terminal regarding the calculated location of the user terminal, generate user data, and transmit the generated user data to the manufacturer.

At step S15, the vehicle terminal controls the vehicle using the location of the user terminal received from the server.

By having the server perform the calculation of the user terminal's location for the vehicle terminal, performance bottlenecks within the vehicle, such as those in the MCU, can be resolved. This approach reduces or relaxes necessary review items during algorithm design (such as capacity and processing time), enables positioning algorithm design beyond the constraints of limited in-vehicle resources, allows the use of algorithms previously inaccessible on existing platforms (such as Deep-Learning algorithms), and permits the utilization of information within the terminal when the user terminal and server are connected.

Furthermore, utilizing servers facilitates easier management and maintenance. It allows for easier incorporation of usage data and customer feedback, simplifies data acquisition and tracking for performance improvement purposes, eases data collection by vehicle type, enables immediate response to customer pain points, facilitates periodic algorithm optimization and update management based on collected data, and allows for easier adaptation to vehicle platform changes (SDV).

Furthermore, resource savings are achievable. If there are n vehicles equipped with digital keys, the service can be provided using fewer than n processors. As the current digital key system architecture already communicates with various servers such as OEMs and Device Servers, it is anticipated that existing architecture servers can also be utilized. By designing a base model and setting only the input parameters necessary to distinguish vehicles, a single positioning algorithm can be applied to multiple vehicles, potentially reducing man-hours.

Meanwhile, embodiments of the present invention may be implemented in computer-readable code on a computer-readable recording medium. A computer-readable recording medium encompasses any type of recording device on which data readable by a computer system is stored.

Examples of computer-readable recording media include ROM, RAM, CD-ROM, magnetic tape, floppy disk, optical data storage devices, etc. Furthermore, computer-readable recording media may be distributed across networked computer systems, enabling computer-readable code to be stored and executed in a distributed manner. Moreover, the functional programmes, codes, and code segments for implementing the present invention can be readily deduced by programmers in the technical field to which the invention pertains.

A person skilled in the art relating to the present embodiments will understand that the disclosed methods may be implemented in modified forms without departing from the essential characteristics of the above-described embodiments. Therefore, the disclosed methods should be considered from an illustrative perspective rather than a restrictive one. The scope of the present invention is defined not by the foregoing description but by the appended claims, and all differences within the scope of the claims shall be interpreted as falling within the scope of the present invention.

## Claims

1. A digital key system comprising:
a user terminal;
a vehicle terminal configured to perform communication with the user terminal; and
a server configured to perform communication with the vehicle terminal,
wherein the vehicle terminal transmits data measured through communication with the user terminal to the server and controls a vehicle by using a location of the user terminal received from the server, and
wherein the server calculates the location of the user terminal with respect to the vehicle terminal by using data received from the vehicle terminal and transmits the location of the user terminal to the vehicle terminal.

2. The digital key system of claim 1, wherein the vehicle terminal comprises:
a first communication module configured to broadcast a first signal and detect the user terminal by receiving a second signal corresponding to the first signal from the user terminal; and
a plurality of second communication modules configured to communicate with the user terminal respectively and disposed apart from each other.

3. The digital key system of claim 2, wherein the plurality of second communication modules operates when the first communication module detects the user terminal.

4. The digital key system of claim 2, wherein the vehicle terminal transmits a third signal to the user terminal via each of the plurality of second communication modules, and transmits data of a fourth signal received from the user terminal to the server.

5. The digital key system of claim 4, wherein the data of the fourth signal comprises a time at which the third signal was transmitted and a time at which the fourth signal was received, or a channel impulse response information of the fourth signal.

6. The digital key system of claim 4, wherein the server calculates the location of the user terminal using positions of the plurality of second communication modules and the data of the fourth signal.

7. The digital key system of claim 1, wherein the vehicle terminal comprises a control module configured to control the vehicle based on the location of the user terminal.

8. The digital key system of claim 1, wherein the server comprises a neural network learned to calculate the location of the user terminal from data measured by the vehicle terminal through communication with the user terminal.

9. The digital key system of claim 1, wherein the server generates user data by receiving feedback information from the user terminal regarding the calculated location of the user terminal and transmits the generated user data to a manufacturer.

10. A vehicle control method comprising:
communicating, by a vehicle terminal, with a user terminal;
transmitting, by the vehicle terminal, data measured through communication with the user terminal to a server;
calculating, by the server, a location of the user terminal with respect to the vehicle terminal by using the data received from the vehicle terminal;
transmitting, by the server, the calculated location of the user terminal to the vehicle terminal; and
controlling, by the vehicle terminal, a vehicle using the location of the user terminal received from the server.
